(19) Europäisches Patentamt
European Patent Office
Office européen des brevets

(11) Publication number: 0 167 621
B1

(12) EUROPEAN PATENT SPECIFICATION

(45) Date of publication of patent specification: 03.01.90

(51) Int. Cl.$^5$: C 02 F 1/54

(21) Application number: 85900847.6

(22) Date of filing: 08.01.85

(86) International application number:
PCT/US85/00022

(87) International publication number:
WO 85/03065 18.07.85 Gazette 85/16

# (54) MINERAL DEWATERING METHOD.

(30) Priority: 09.01.84 US 569137

(43) Date of publication of application:
15.01.86 Bulletin 86/03

(45) Publication of the grant of the patent:
03.01.90 Bulletin 90/01

(84) Designated Contracting States:
BE

(56) References cited:
DD-A- 150 434
DE-A-2 800 137
GB-A- 722 746
GB-A- 994 642
GB-A-1 197 688
JP-A-53 021 399
US-A-3 839 314
US-A-4 207 186
US-A-4 322 219
US-A-4 410 431

N, SCHICK, NONIONIC SURFACTANTS, MARCEL DECKKER, INC., 1966, p 334-337 and 368-371

(73) Proprietor: THE DOW CHEMICAL COMPANY
2030 Dow Center Abbott Road P.O. Box 1967
Midland Michigan 48640-1967 (US)

(72) Inventor: CAWIEZEL, Kay, E.
225 North Elder
Tulsa, OK 74012 (US)

(74) Representative: Sternagel, Hans-Günther, Dr. et al
Patentanwälte Dr. Michael Hann Dr. H.-G. Sternagel Sander Aue 30
D-5060 Bergisch Gladbach 2 (DE)

EP 0 167 621 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention pertains generally to a method for dewatering mineral concentrates and, in particular, to an improvement in such method wherein a particular family of low molecular weight nonionic surfactant materials is employed therein.

The mining, processing, purification etc. of naturally occuring minerals frequently involves one or more processing or treatment operations in which fine mesh size particles of the mineral of interest is suspended or dispersed in a continuous aqueous medium and wherein it is desired to separate said mineral particles from said aqueous medium. Often in such operations it is also desired to reduce the residual moisture content of the thus-recovered mineral material to as low a value as is practicable under the circumstances. For example, in coal processing plants, mined coal is ground and washed to remove sulfur and gangue materials therefrom. In the fine coal circuit of such facilities fine mesh size coal (e.g., 9.5 × 0.6 mm; less than 0.6 mm and/or less than 0.15 mm) is recovered and dewatered using various filtering and/or drying equipment. For example, vacuum filtering equipment is often used to dewater 0,6 mm (28 × 0 mesh) size coal in such coal processing facilities. Such equipment is typically capable only of reducing the fine coal filtercake moisture content to a level of 25 to 30 weight percent based upon the total weight of the moist coal filtercake. Centrifugal driers of various types are also employed in the fine coal circuits of coal processing facilities to dewater coal in the size range up to and including 9.5 mm by 0.6 mm (3/8″ × 28 mesh). Such driers are typically used in conjunction with dewatering screens located immediately upstream of said driers in the dewatering operation. The lowest moisture content that such driers are capable of accomplishing as a practical matter is dependent upon a variety of factors including the particle size of the coal being dewatered. However, as a general rule such centrifugal driers are typically capable of dewatering coal having a particle size of less than 0.15 mm (100 × 0 mesh) to a moisture level of from 20 to 24 weight percent on a total weight basis; coal having a particle size of less than 0.6 mm (28 × 0 mesh) to a moisture level of from 8 to 10 weight percent on a total weight basis; and coal having a particle size of from 9.5 mm × 0.6 mm (3/8″ × 28 mesh) to a moisture level of from 6 to 8 weight percent on a total weight basis.

It is known that various chemicals (e.g., surfactant materials) can be employed in conjunction with the aforementioned dewatering equipment (e.g., being added to the coal slurry prior to filtering or being applied to a moist bed of coal particles after screening and prior to the centrifugal drier) to aid or enable such dewatering equipment to achieve reduced residual moisture contents. Unfortunately, however, surfactant materials used or suggested for use to date for such purpose have had one or more serious deficiencies or disadvantages associated with the use of same. Examples of some of the limitations or disadvantages which have been encountered include excessive foaming in the process; excessive propensity to accumulate in recycled process waters with the accompanying need to employ treatment steps and/or equipment for the removal of same; incompatibility with other types of additives such as flocculants, filter aids etc. which are commonly employed in mineral processing/recovery operations; and the like.

The foregoing problems or limitations, while common to most mineral processing/recovery operations, are particularly troublesome for the coal industry since the current economic realities associated with that particular product are such that extensive plant modernization and the installation of special treatment operations and/or equipment for the control of excessive dewatering aid build up in plant recycle streams is generally not economically feasible.

Avoiding such problems has been tried, e.g. by adding ethylene oxide polymerisates together with fatty acids, such as tall oil fatty acid, according to the description in US—A—4,410,431.

Defoaming agents for use in dishwashing are proposed in GB—A—994,642 which refers to condensing ethylene oxide and butylene oxide groups with glycerine and the like.

In light of the foregoing, it can be seen that it would be highly desirable to provide an improved method for dewatering mineral concentrates which method would be suitable for or capable of avoiding the above-noted problems of the various prior art processes.

It has now been discovered that certain nonionic surfactants based upon relatively low molecular weight block copolymers of ethylene oxide and butylene oxide and corresponding to the formula I below are particularly effective as low foaming dewatering aids for various mineral concentrates. More specifically said nonionic surfactants correspond to the formula

$$RO-(CH_2-CH_2-O)_x-(CH_2-\overset{\begin{matrix}CH_3\\|\\CH_2\\|\end{matrix}}{CH}-O)_y-H \qquad (I)$$

wherein x is an integer of from 2 to 10, y is an integer of from 1 to 10 and R is a linear or branched aliphatic radical having from 1 to 16 carbon atoms. Accordingly, the present invention resides in an improved method for dewatering mineral concentrates in which an aqueous slurry or dispersion of fine mesh size mineral particles is treated (e.g., screened and dried or filtered) to remove a substantial portion of the

continuous aqueous medium therefrom and to thereby provide a moist bed of said mineral particles and in which the improvement comprises the use of the nonionic surfactant of the formula I above as a dewatering aid in said method.

The indicated method is particularly beneficial in that the formula I surfactants have been found, in addition to being of a low foaming character, to also have a substantially reduced propensity to build up or accumulate in recirculating plant water. Such surfactants are especially well suited for use in mineral processing facilities which are not equipped with the capability of treating recycled plant water to remove excess surfactant therefrom.

The improved method of the present invention is applicable to any mineral concentrate which is conventionally subjected to dewatering operations. Examples of mineral concentrates which can suitably be dewatered in accordance with the present invention include concentrates of alumina, copper, iron sulfides and/or oxides, mineral salts, coal refuse, fine coal dispersions and the like. Such concentrations are typically in the form of aqueous slurries or dispersions of finely ground ores (i.e., fine mesh size mineral particles) prior to said dewatering operations.

The improved dewatering method of the present invention is especially beneficial when employed in the dewatering of aqueous slurries or dispersions of finely ground coal particles.

As has been noted above, the improved method of the present invention involves using as a dewatering aid a nonionic surfactant material which is derived from a low molecular weight block copolymer of ethylene oxide and butylene oxide and which corresponds to the formula:

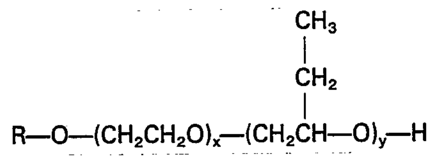

(I)

wherein x is an integer of from 2 to 10, y is an integer of from 1 to 10 and R is a linear or branched aliphatic radical of from 1 to 16 carbon atoms.

Preferably, the surfactant material has a hydrophilic-lipophilic balance (HLB) value of from 2 to 8. In those instances where R contains from 1 to 5 carbon atoms, it is preferred that the integer y be from 5 to 10 and that the integer x be from 2 to 5. Alternatively, when R contains from 8 to 16 carbons, it is preferred that the integer y be from 1 to 6 and that the integer x be from 5 to 10.

The use of said surfactant materials is particularly beneficial in that the low foaming nature thereof serves to minimize or eliminate pump cavitation and froth buildup problems which can otherwise occur when surfactants having a greater propensity to foam are employed in said process or method. Additionally, said surfactant materials are particularly effective in terms of their dewatering efficiency and are further advantageous by virtue of having a reduced propensity to accumulate in aqueous plant recycle streams. Moreover, the nonionic character of said materials is also a practical advantage since, as a result, said materials do not interfere with (i.e., are not incompatible with) anionic or cationic materials (e.g., flocculants, filter aids, etc.) which may also be employed at some stage of the overall mineral recovery process of interest.

In practice, the indicated surfactant material can be applied to the mineral concentrate of interest in any fashion which may be desired or convenient under the circumstances so long as the surfactant is associated (i.e., in contact) with the particulate material during at least a portion of the dewatering treatment. Thus, for example, the surfactant may be added to the aqueous mineral slurry or dispersion of interest prior to the dewatering of the same. In fact, such method of application is preferred in the case where an extremely fine mesh size particulate (e.g., less than 0.6 mm) is to be dewatered using vacuum filtering equipment.

Alternatively, a relatively dilute aqueous solution of said surfactant (e.g., containing, for example, from 2 to 5 weight percent surfactant on a total weight basis) can be separately applied to (e.g., sprayed onto) a moist bed of the mineral particulates during the course of the dewatering operations. This latter application technique is preferred, in fact, in those instances where the dewatering equipment employed includes a dewatering screen followed by a centrifugal drier. In such instances it is generally preferred to spray the indicated aqueous surfactant solution onto the moist bed of particulate material near the exit end of the dewatering screen apparatus and prior to the centrifugal drier.

The amount of the indicated surfactant material which is employed in the present process is not particularly critical so long as the amount employed is effective to measurably aid or enhance the dewatering of the mineral concentrate. That is, the surfactant is, as a general proposition, employed in an amount sufficient to measurably reduce the moisture level achieved relative to that which is otherwise achieved in the same dewatering operation in the absence of the nonionic surfactant material. As a practical matter, what constitutes an effective dewatering amount in a given instance will depend upon a number of factors such as, for example, surface characteristics and particle size of the mineral particle being processed, dewatering equipment being used, plant operating rate and conditions, and the like. For example, dewatering of extremely fine mesh mineral concentrate (e.g. less than 0.6 mm) in the absence of the surfactant material will normally result in a moist mineral bed containing at least 8 (and oftentimes at

least 20) weight percent water on a total weight basis depending upon the particular type of dewatering equipment employed. In such fine mesh dewatering operations, it is normally preferred to employ the surfactant in an amount sufficient to enable the dewatering operation to reduce the final mineral bed moisture level achieved by at least 2 (preferably 3 and most preferably 4) weight percent water on a total weight basis. On the other hand, in dewatering mineral concentrates in the 9.5 mm × 0.6 mm size range, screening and centrifugal drying in the absence of surfactant will typically result in residual moisture contents of at least 6 weight percent on a total weight basis. In this latter type of dewatering operation it is generally preferred to utilize the formula I surfactant in an amount sufficient to reduce the final mineral bed moisture level by at least 1 (preferably at least 2) weight percent water on a total weight basis.

Typically, use of the indicated surfactant materials in an amount ranging from 25 to 1,500 parts by weight per million parts by weight of mineral solids is sufficient to achieve the desired dewatering aid results. In dewatering operations employing vacuum filter equipment it is generally preferable to utilize the surfactant in an amount ranging from 200 to 1,500 parts by weight per million parts by weight of mineral solids. When a centrifugal drier is employed, it is normally preferred to use the surfactant in an amount ranging from 25 to 1,000 parts by weight per million parts by weight of mineral solid.

As has been indicated, a notable advantage associated with the use of the aforementioned surfactant materials is the fact that they are relatively low foaming in character. As a practical matter, this low foaming characteristic can be quantified by dissolving 0.1 volume percent of the active surfactant material in 250 ml water at ambient temperature (e.g., 23°C); mixing the resulting solution at low speed in a waring blender to foam the same; immediately thereafter pouring the foamed solution into a 500 ml graduated cylinder (i.e., having a 4.5 cm inside diameter); and measuring the height of the foam produced. When measured in the foregoing fashion, the nonionic surfactants employed in this invention exhibit an initial foam height of less than 10 centimeters (cm) and preferably less than 5 cm.

The practice of the present invention is further illustrated by reference to the following examples in which all parts and percentages are on a weight basis unless otherwise indicated.

Examples 1, 2 and 3

A filtercake coal specimen obtained from the fine mesh coal circuit (i.e., less than 0.6 mm) of a commercial coal processing plant is divided into 200 gram samples and each sample is mixed with 450 milliliters (ml) of water to give a 31 percent solids slurry. Each slurry is stirred to provide a homogeneous mixture and a surfactant, in the form of a one percent aqueous solution, is added to the slurry in the amount indicated in Table I below.

A filter screen with 0.42 mm × 0.25 mm (40 × 60 mesh) wire screen and of a known weight is then immersed in each slurry and a suction of about 61 Pa is applied across the screen. After 18 seconds, the filter screen is lifted out of the slurry and air dried for three minutes. The filter screen containing the filtercake is then weighed (and the filter screen weight subtracted to get "wet weight") and dried in an oven overnight at 65.6°C. Upon cooling, the filtercake-containing screen is weighed again (and the filter screen weight is again subtracted to get "dry weight") and the percent moisture content after filtering and before drying is calculated as follows:

$$\% \text{ moisture} = \frac{\text{wet weight} - \text{dry weight}}{\text{wet weight}} \times 100\%$$

In Example 1, Surfactant A, is a tridecyl alcohol-capped block copolymer of ethylene oxide (EO) and butylene oxide (BO) containing an average of 7.5 EO units and an average of 1.8 BO units per molecule. In Example 2, Surfactant B is a tridecyl alcohol-capped block copolymer of EO and BO containing an average of 7.5 EO units and 3.6 BO units per molecule. In Example 3, Surfactant C is an ethyl alcohol block copolymer of EO and BO containing an average of 3.2 EO units and 9.0 BO units per molecule.

The results of these experiments are set forth in Table I below. Also set forth in Table I for comparative purposes are results of testing carried out in the same fashion using an anionic surfactant (i.e., sodium bis-(2-ethylhexyl)sulfosuccinate) which has gained widespread commercial acceptance as a dewatering aid in the iron and copper ore processing industries. As can be seen, Surfactants A, B and C provide dewatering aid results comparable to those obtained using sodium bis-(2-ethylhexyl)sulfosuccinate.

TABLE I

| Example Number | Surfactant | Run Number | Surfactant Concentration (ppm) | Percent Moisture Retained (weight%) | Difference in Percent Moisture from Blank (weight%) |
|---|---|---|---|---|---|
| 1 | Surfactant A | Blank* | 0 | 27.5 | — |
| | Surfactant A | 1.1 | 250 | 24.6 | −2.9 |
| | Surfactant A | 1.2 | 500 | 23.4 | −4.1 |
| | Surfactant A | 1.3 | 1000 | 21.5 | −6.0 |
| 2 | Surfactant B | Blank* | 0 | 24.7 | — |
| | Surfactant B | 2.1 | 250 | 23.2 | −1.5 |
| | Surfactant B | 2.2 | 500 | 21.7 | −3.0 |
| | Surfactant B | 2.3 | 1000 | 22.7 | −2.0 |
| | Surfactant B | 2.4 | 1500 | 21.4 | −3.3 |
| 3 | Surfactant C | Blank* | 0 | 24.1 | — |
| | Surfactant C | 3.1 | 250 | 21.7 | −2.4 |
| | Surfactant C | 3.2 | 500 | 21.1 | −3.0 |
| | Surfactant C | 3.3 | 1000 | 20.6 | −3.5 |
| | Surfactant C | 3.4 | 1500 | 19.9 | −4.2 |
| Comparative Experiment | Sodium bis-(2-ethylhexyl)-sulfosuccinate | Blank* | 0 | 25.0 | — |
| | Sodium bis-(2-ethylhexyl) sulfosuccinate | CX.1* | 250 | 23.6 | −1.4 |
| | | CX.2* | 500 | 23.2 | −1.8 |
| | | CX.3* | 1000 | 22.9 | −2.1 |
| | | CX.4* | 1500 | 21.4 | −3.6 |

* Not an example of the present invention.

Examples 4, 5 and 6

In these examples the relative propensity to foam at ambient temperature is determined for Surfactants A, B and C of Examples 1—3 above and for sodium bis(2-ethylhexyl)sulfosuccinate. The test procedure employed corresponds to that described earlier in this specification. The results of this determination are summarized in Table II below. In addition, foaming propensity at a lower temperature (i.e., (6°C)) are also presented in Table II. For these latter results, basically the same procedure is followed except that the testing is conducted at (6°C), rather than at 23°C.

TABLE II

| Example Number | Surfactant | Foam Height (cm) at 23°C | Foam Height (cm) at 6°C |
|---|---|---|---|
| 4 | Surfactant A | 4.5 | 27.0 |
| 5 | Surfactant B | 1.0 | 1.0 |
| 6 | Surfactant C | 1.0 | 1.0 |
| Comparative Experiment* | Sodium bis(2-ethylhexyl) sulfosuccinate | 35.0 | 33 |

* Not an example of the present invention.

Examples 7 and 8

In these examples, Surfactants A and B from Examples 1 and 2 are employed in varying amounts in field evaluations in an operating coal processing plant. In these field evaluations the surfactants are applied as a dilute aqueous solution by spraying such solution onto the moist bed of coal particles near the exit end of a dewatering screen just prior to entering a centrifugal drier.

Samples of the dewatered coal exiting the centrifugal drier are collected and the moisture level of such samples is determined with the procedures described in Examples 1—3 above.

In Example 7, the coal particles involved are in the less than 0.15 mm (100 × 0 mesh) size range. In Example 8, the coal particles involved are in the 9.5 mm × 0.6 mm (3/8" × 28 mesh) size range.

The results of these field evaluations are summarized in Table III below.

TABLE III

| Example Number | Run Number | Surfactant Type | Concentration (kg/2000 kg of coal) | Moisture Content (weight percent) | Moisture Reduction (weight percent) |
|---|---|---|---|---|---|
| 7** | Blank* | None | 0 | 22.6 | — |
| | 7.1 | B | 0.3 | 19.4 | −3.2 |
| | 7.2 | B | 0.6 | 17.3 | −5.3 |
| | 7.3 | B | 0.8 | 16.4 | −6.2 |
| 8*** | Blank* | A | 0 | 6.9 | — |
| | 8.1 | A | 0.02 | 6.5 | −0.4 |
| | 8.2 | A | 0.04 | 5.7 | −1.2 |
| | 8.3 | A | 0.11 | 5.1 | −1.8 |
| | 8.4 | A | 0.19 | 4.2 | −2.7 |

* Not an example of the present invention.
** 0,110 mm (100 × 0 mesh) coal circuit.
*** 9,52 mm × 0,595 mm (3/8" × 28 mesh) coal circuit.

Example 9

In this example an amount of a 5 percent surfactant solution necessary to give the dosage levels listed below is mixed into 100 milliliters of a 67 percent alumina slurry having a pH of 13.6. The slurry is then poured into a 10 cm diameter Buchner funnel (with N.4 Whitman paper) connected to 250 ml suction flask filtration apparatus. A vacuum of about 68 Pa is applied to the filter for 30 seconds. The moisture level of the filtercake is determined with the procedures described in Example 1—3 above. The results of the experiment is set forth in Table IV below.

The above procedure is repeated using sodium bis(2-ethylhexyl)sulfosuccinate as a comparative experiment. Upon addition of this anionic surfactant to the 13.6 pH alumina slurry, the slurry gells and water is retained.

TABLE IV

| Example Number | Surfactant | Run Number | Surfactant Concentration (ppt)** | Percent Moisture Retained (% Moisture) | Difference in Percent Moisture from Blank (weight%) |
|---|---|---|---|---|---|
| 9 | Surfactant B | Blank* | 0 | 13.9 | — |
| | Surfactant B | 9.1 | 0.8 | 10.3 | −3.6 |
| | Surfactant B | 9.2 | 1.6 | 10.7 | −3.2 |
| | Surfactant B | 9.3 | 3.2 | 9.7 | −4.2 |
| | Surfactant B | 9.4 | 6.4 | 9.4 | −4.5 |

* Not an example of the present invention.
** ppt = pounds per ton (kg/2000 kg) of alumina solids.

**Claims**

1. A method for dewatering an aqueous mineral dispersion of fine particles using as a dewatering aid a nonionic surfactant, said method being characterized in that said surfactant is of the formula

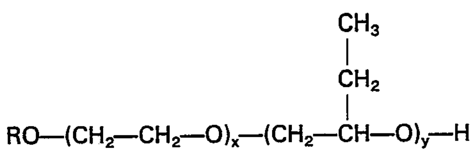

wherein x is an integer of 2—10, y is an integer of 1—10, and R is a linear or branched aliphatic radical having 1—16 carbon atoms.

2. The method of claim 1 wherein in the structural formula for said nonionic surfactant the integer y is from 1—6, the integer x is from 5—10, and R contains 8—16 carbon atoms, or, alternatively, the integer x is from 2—5, the integer y is from 5—10, and R contains from 1—5 carbon atoms.

3. The method of claim 1 wherein an aqueous solution of said nonionic surfactant is applied to the aqueous mineral slurry or dispersion prior to the treatment of the same.

4. The method of claim 1 wherein an aqueous solution of said nonionic surfactant is separately applied to said mineral bed during the treatment operation.

5. The method of claim 1 wherein said nonionic surfactant is employed in an amount of from 25—1,500 parts by weight per million parts by weight of mineral solids.

6. The method of claim 1 wherein the dewatering treatment is accomplished using a vacuum filter and wherein said nonionic surfactant is employed in an amount ranging from 200—1,500 parts by weight per million parts by weight of mineral solids.

7. The method of claim 1 wherein the dewatering treatment utilizes a centrifugal drier and wherein the nonionic surfactant is employed in an amount ranging from 25—1,000 parts by weight per million parts by weight of mineral solids.

8. The method of claim 1 wherein the mineral being dewatered is coal, or wherein the mineral concentrate being dewatered is alumina, copper, iron sulfides or oxides, mineral salts, fine coal or coal refuse.

9. The method of claim 1 wherein the nonionic surfactant has a HLB value in the range of from 2—8.

**Patentansprüche**

1. Verfahren zum Entwässern einer wäßrigen Mineraldispersion feiner Teilchen unter Verwendung eines nicht ionischen oberflächenaktiven Mittels als Entwässerungshilfsmittel, wobei das Verfahren dadurch gekennzeichnet ist, daß das oberflächenaktive Mittel die Formel

$$RO—(CH_2—CH_2—O)_x—(CH_2—\underset{\substack{|\\CH_2\\|\\CH_3}}{CH}—O)_y—H$$

hat, in der x eine ganze Zahl von 2—10, y eine ganze Zahl von 1—10 und R ein linearer oder verzweigter aliphatischer Rest mit 1—16 Kohlenstoffatomen ist.

2. Verfahren nach Anspruch 1, dadurch gekennzeichnet, daß in der Strukturformel des nicht ionischen oberflächenaktiven Mittels die ganze Zahl y von 1—6 ist, die ganze Zahl x von 5—10 ist und R 8—16 Kohlenstoffatome enthält oder, alternativ, die ganze Zahl x von 2—5 ist, die ganze Zahl y von 5—10 ist und R 1—5 Kohlenstoffatome enthält.

3. Verfahren nach Anspruch 1, dadurch gekennzeichnet, daß eine wäßrige Lösung des nicht ionischen oberflächenaktiven Mittels der wäßrigen Mineralaufschlämmung oder -dispersion vor deren Behandlung zugesetzt wird.

4. Verfahren nach Anspruch 1, dadurch gekennzeichnet, daß die wäßrige Lösung des nicht ionischen oberflächenaktiven Mittels dem Mineralbett während der Behandlung getrennt zugeführt wird.

5. Verfahren nach Anspruch 1, dadurch gekennzeichnet, daß das nicht ionische oberflächenaktive Mittel in einer Menge von 25—1.500 Gewichtsteilen pro Million Gewichtsteile Mineralfeststoffe verwendet wird.

6. Verfahren nach Anspruch 1, dadurch gekennzeichnet, daß die Entwässerungsbehandlung unter Verwendung eines Vakuumfilters ausgeführt wird und das nicht ionische oberflächenaktive Mittel in einer Menge von 200—1.500 Gewichtsteilen pro Million Gewichtsteile Mineralfeststoffe verwendet wird.

7. Verfahren nach Anspruch 1, dadurch gekennzeichnet, daß für die Entwässerungsbehandlung ein Zentrifugaltrockner verwendet wird und das nicht ionische oberflächenaktive Mittel in einer Menge von 25—1.000 Gewichtsteilen pro Million Gewichtsteile Mineralfeststoffe verwendet wird.

8. Verfahren nach Anspruch 1, dadurch gekennzeichnet, daß das zu entwässernde Mineral Kohle ist oder das zu entwässernde Mineralkonzentrat Aluminium-, Kupfer-, Eisensulfide oder -oxide, Mineralsalze, feine Kohle oder Kohleabfall ist.

9. Verfahren nach Anspruch 1, dadurch gekennzeichnet, daß das nicht ionische oberflächenaktive Mittel einen HLB Wert im Bereich von 2—8 aufweist.

**Revendications**

1. Procédé de déshydratation d'une dispersion aqueuse de minéraux en fines particules, en utilisant comme adjuvant de déshydratation, un agent tensio-actif non ionique, ce procédé étant caractérisé en ce que l'agent tensio-actif susdit répond à la formule:

$$RO—(CH_2—CH_2—O)_x—(CH_2—\underset{\substack{|\\CH_2\\|\\CH_3}}{CH}—O)_y—H$$

dans laquelle x est un nombre entier de 2 à 10, y est un nombre entier de 1 à 10, et R est un radical aliphatique linéaire ou ramifié comportant 1 à 16 atomes de carbone.

2. Procédé suivant la revendication 1, caractérisé en ce que, dans la formule structurale de cet agent tensio-actif anionique, le nombre entier y a une valeur de 1 à 6, le nombre entier x a une valeur de 5 à 10 et R contient 8 à 16 atomes de carbone, ou bien, à titre de variante, le nombre entier x a une valeur de 2 à 5, le nombre entier y a une valeur de 5 à 10 et R comporte 1 à 5 atomes de carbone.

3. Procédé suivant la revendication 1, caractérisé en ce qu'une solution aqueuse de l'agent tensio-actif non ionique susdit est appliquée à la boue ou à la dispersion aqueuse de minéraux avant leur traitement.

4. Procédé suivant la revendication 1, caractérisé en ce qu'une solution aqueuse de l'agent tensio-actif non ionique est appliquée séparément au lit de minéraux durant l'opération de traitement.

5. Procédé suivant la revendication 1, caractérisé en ce que l'agent tensio-actif non ionique est utilisé en une quantité de 25 à 1.500 parties en poids par million de parties en poids des solides minéraux.

6. Procédé suivant la revendication 1, caractérisé en ce que le traitement de déshydratation est réalisé en utilisant un filtre à vide et en ce que l'agent tensio-actif non ionique est utilisé en une quantité allant de 200 à 1.500 parties en poids par million de parties en poids de solides minéraux.

7. Procédé suivant la revendication 1, caractérisé en ce que le traitement de déshydratation utilise une essoreuse centrifuge et en ce que l'agent tensio-actif non ionique est utilisé en une quantité allant de 25 à 1.000 parties en poids par million de parties en poids de solides minéraux.

8. Procédé suivant la revendication 1, caractérisé en ce que le minéral que l'on déshydrate est du charbon, ou en ce que le concentré de minéraux que l'on déshydrate est l'alumine, le cuivre, des sulfures et oxydes de fer, des sels minéraux, du charbon fin ou des rebuts de charbon.

9. Procédé suivant la revendication 1, caractérisé en ce que l'agent tensio-actif non ionique a une valeur d'équilibre hydrophile-lipophile (HLB) de l'ordre de 2—8.